# EUROPEAN PATENT APPLICATION

(11) **EP 0 911 679 A2**
(43) Date of publication of application: **28.04.1999**
(21) Application number: 98308663.8
(22) Date of filing: 22.10.1998
(51) Int. Cl.: G02F 1/1335, G02F 1/1333

(54) **Liquid crystal display element**

(30) Priority: 22.10.1997 JP 289520/97
(71) Applicant: Micro Optics Company Ltd., Sagamihara-shi, Kanagawa (JP)
(72) Inventor: Morio, Kenji, c/o Micro Optics Co., Ltd., Sagamihara-shi, Kanagawa (JP); Taniguchi, Satoshi, Micro Optics Co., Ltd., Sagamihara-shi, Kanagawa (JP); Hamanaka, Kenjiro, Micro Optics Co., Ltd., Sagamihara-shi, Kanagawa (JP)
(74) Representative: Piésold, Alexander J.

(57) **Abstract**

By fitting a planar micro-lens array provided with one or more marks (15) with a liquid crystal panel provided with one or more corresponding marks (23), it is possible to align the position of both exactly. The marks according to the present invention may comprise rod shapes, cross shapes, ring shapes, or square shapes, among others.

## Description

The present invention relates to a liquid crystal display element formed by bonding a planar micro-lens array onto a liquid crystal panel.

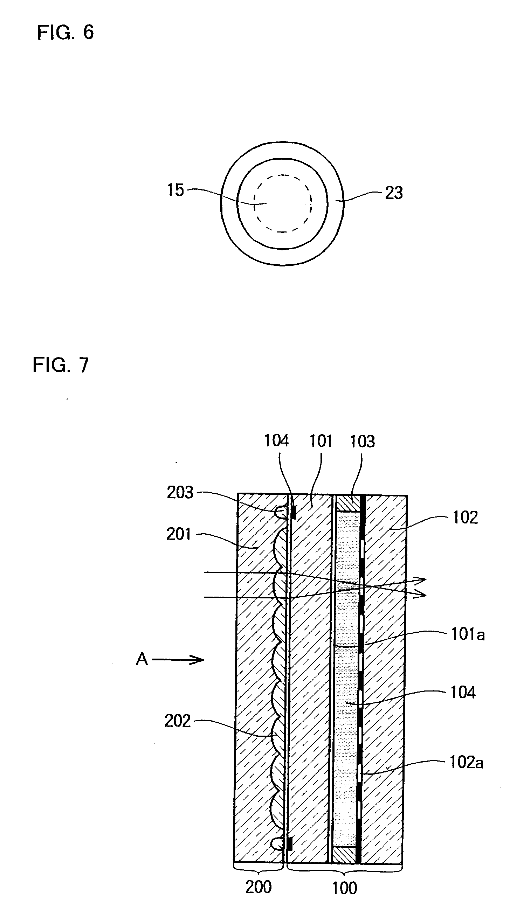

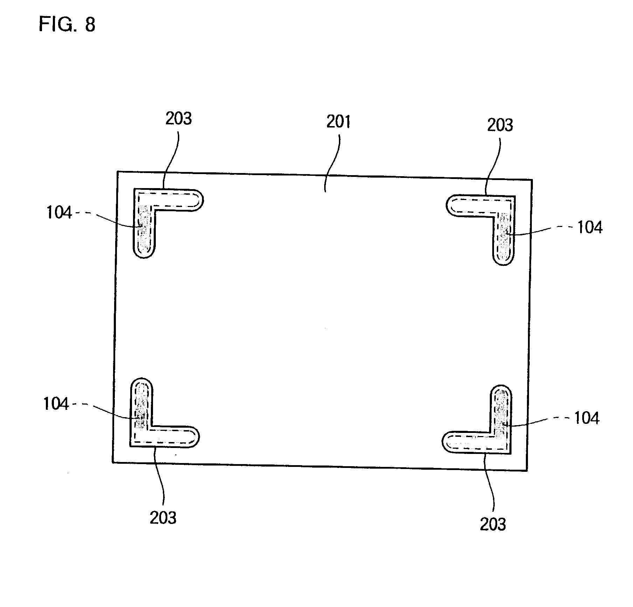

Explaining a structure of a liquid crystal display element by referring to Figs. 7 and 8, a liquid crystal display element is formed by bonding a planar micro-lens array 200 onto a liquid crystal panel 100 and a gap is formed between glass substrates 101 and 102 by a spacer 103, into which liquid crystal 104 is poured. On a surface of the glass substrate 101 there are formed opposing electrodes 101a at the side of the liquid crystal 104, and on a surface of the other glass substrate 102 there are formed transparent pixel electrodes 102a at the side of the liquid crystal 104. Further, additional portions other than the transparent pixel electrodes 102a are formed which are not transparent, such as wiring, TFTs (thin film transistors), etc.

Recessed portions are formed on the glass substrate 201, and a resin of high refractive index is filled into and cured in the recessed portions, thereby obtaining a large number (a plurality) of small convex lens 202 and these are bonded onto the liquid crystal panel 100 by a bond comprising a resin of low refractive index, serving to focus irradiated light through each of the plural convex lens into pixel electrodes (i.e., openings for the pixels) 102a, so as to increase the brightness of an image projected upon the screen.

As another method of providing a large number of convex lens in the planar micro-lens array, the plural microlenses can also be directly formed by a stamper by performing a stamping process on the surface of a glass substrate without forming recessed portions on the glass substrate.

In the case of bonding a planar micro-lens array 200 onto a liquid crystal panel 100, if the position is off or if the two are misaligned, it becomes impossible to obtain correct focusing of the light irradiated onto the pixel electrodes (i.e., the openings for the pixels) 102a.

Therefore, in the conventional art, marks 203 are formed in four corners at the same time when a large number of convex lens 202 are formed, and as shown in Fig. 8, a planar microlens array 200 and a liquid crystal panel 100 are made to fit together by aligning marks 104 with the marks 203, in which the marks 104 are formed on the bonding surface of the liquid crystal panel 100 in advance.

The marks 203 which are formed on the side of the planar micro-lens array 200 are formed with a resin of high refractive index, and therefore the marks 104 on the side of the liquid crystal panel 104 can be seen through the marks 203 which act as convex lenses. As a result, it is difficult to fit the marks exactly.

According to a first aspect, the present invention provides a liquid crystal display element formed by bonding a planar micro-lens array onto a liquid crystal panel, comprising a plurality of convex lenses and a first mark formed on a surface of said planar micro-lens array with a resin of high refractive index, and a second mark which corresponds to said first mark on the planar micro-lens array formed on a surface of the liquid crystal panel, wherein said first and second marks have corresponding forms so as to precisely fit and align the planar micro-lens array with the liquid crystal panel when one of said marks is aligned within a space formed by the other of said marks.

In accordance with a second aspect, the present invention provides a method of making a liquid crystal display element, said method comprising the steps of:
providing a planar micro-lens array comprising a plurality of convex lenses and a first mark formed on a surface of said planar micro-lens array with a resin of high refractive index;
providing a liquid crystal panel having a second mark formed in a surface of said liquid crystal panel which corresponds in position and form to said first mark;
aligning said planar micro-lens array with said liquid crystal panel by aligning said first and second marks so that one of said marks is placed within the space formed by the other of said marks; and
bonding said planar micro-lens array in position on said liquid crystal panel.

In one preferred embodiment of the present invention, there is provided a liquid crystal display element formed by bonding a planar micro-lens array onto a liquid crystal panel, comprising a plurality of convex lens and a first mark formed on the surface of said planar micro-lens array with a resin of high refractive index, and a second mark which corresponds to the first mark on the planar micro-lens array formed on the surface of the liquid crystal panel, wherein said first and second marks have corresponding forms so as to precisely fit and align the planar micro-lens array with the liquid crystal panel, by placing the first mark into the space formed with the second mark.

The second mark on the side of the liquid crystal panel can be seen through the flat part which does not act as a lens of the planar micro-lens array, and therefore it becomes easy to align the planar array and panel.

According to a third aspect, the present invention provides a liquid crystal display element comprising a planar micro-lens array which is mounted on a liquid crystal panel, said planar micro-lens array having a first mark comprising a concave hollow filled with high refractive index resin, and said liquid crystal panel having a second mark which is visible through said planar micro-lens array, wherein said first and second marks have corresponding forms and are positioned in such a way relative to each other that when the planar micro-lens array is correctly aligned on said liquid crystal panel, an edge of said second mark is aligned with an edge of said first mark, said second mark being visible through a flat portion of said high refractive index resin which lies adjacent said first mark.

Certain preferred embodiments of the present invention will now be described by way of example only and with reference to the accompanying drawings, in which:

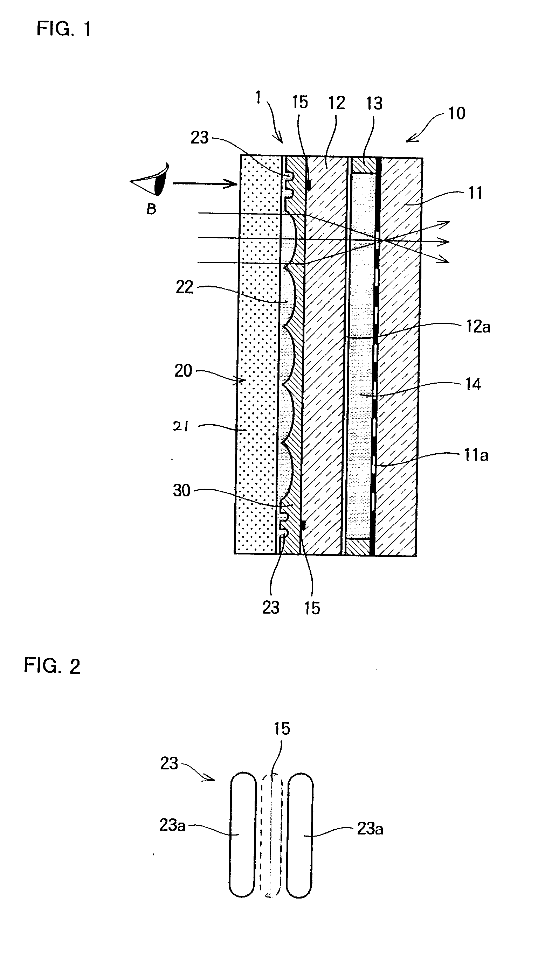

Fig. 1 shows a cross-section view of a preferred liquid crystal display element according to the present invention;
Fig. 2 shows an enlarged view of Fig. 1 from the direction of arrow B shown in Fig. 1;
Fig. 3 shows the same view as Fig. 2, showing another embodiment;
Fig. 4 shows the same view as Fig. 2, showing another embodiment;
Fig. 5 shows the same view as Fig. 2, showing another embodiment;
Fig. 6 shows the same view as Fig. 2, showing another embodiment;
Fig. 7 shows a cross-section view of a conventional liquid crystal display element; and
Fig. 8 is a view of Fig. 7 from the direction of the arrow A in Fig. 7.
As shown in Fig 1, a liquid crystal display element is formed by bonding a planar microlens array onto a liquid crystal panel 10 with a resin of low refractive index 30.

In the liquid crystal panel 10, a gap is formed between glass substrates 11 and 12 by a spacer 13, into which liquid crystal 14 is poured. On a surface of the glass substrate 12 there are formed opposing electrodes 12a at the side of the liquid crystal 14, and on a surface of the other glass substrate 11 there are formed transparent pixel electrodes lla at the side of the liquid crystal 14. Further, additional portions other than the transparent pixel electrodes 11a are formed which are not transparent, such as wiring, TFTs (thin film transistors), etc..

A first mark 15 is formed in four corners of the surface opposite to the planar microlens array 20 of the glass substrate 12. The first mark 15 is formed by, for example, a screen printing process. In the example shown in drawing, the first mark 15 is formed in the surface opposite to the planar microlens array 20 of the glass substrate 12 which composes the liquid crystal panel 10. However, of course, it may be formed in the surface opposite to the liquid crystal 14 of the glass substrate 12.

On the other hand, in the planar microlens array 20, a resin of high refractive index is applied onto the surface of the glass substrate 21, which is molded with a stamper. A large number (a plurality) of convex lens 22 are formed by curing by use of UV (ultra violet) light or heat. Further, second marks 23 are formed in four corners at the same time when a large number of convex lens 22 are formed.

Here, the first mark 15 is rod-shaped and the second mark 23 comprises two rod-like mark elements 23a, wherein the sizes of the first mark 15 and the second mark 23 (mark elements 23a) are set up in order to mutually interfit the position of both exactly by piling or aligning the planar microlens array with the liquid crystal panel so as to place the first mark 15 between the mark elements 23a of the second mark 23.

It should be noted that although only one pair of corresponding marks is described above, the invention may likewise be applied to two or more pairs of corresponding marks.

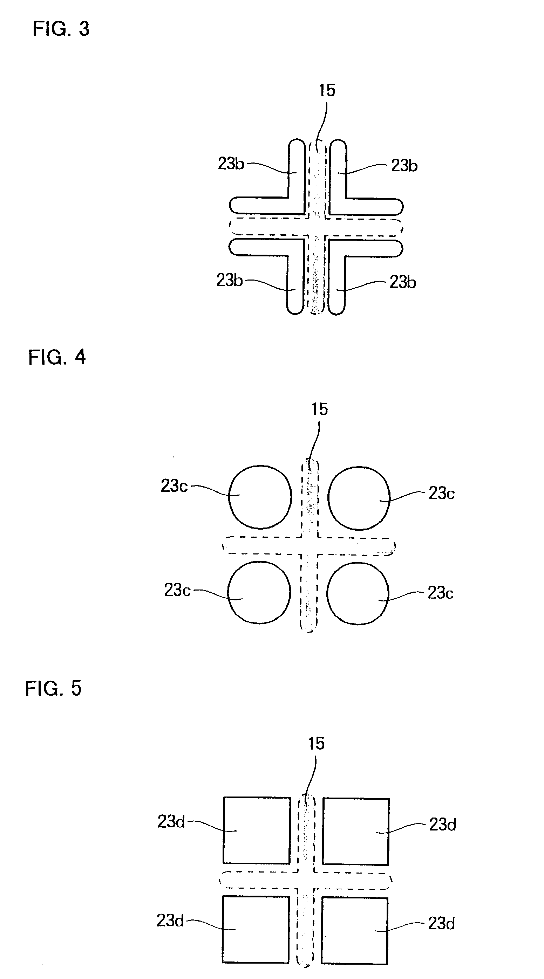

In the case of the embodiment shown in Fig. 3, the first mark 15 is cross-shaped and the second mark 23 comprises four angle-shaped mark elements 23b, wherein the first mark 15 and the mark elements 23b of the second mark 23 are aligned in order to mutually interfit the position of both exactly by piling or aligning the planar microlens array with the liquid crystal panel so as to place the first mark 15 into the gap formed between the mark elements 23b of the second mark 23.

In the case of the embodiment shown in Fig. 4, the first mark 15 is cross-shaped and the second mark 23 comprises four round-shaped mark elements 23c. In the case of the embodiment shown in Fig. 5, the first mark 15 is cross-shaped and the second mark 23 comprises four square-shaped mark elements 23d. In the case of the embodiment shown in Fig. 6, the first mark 15 is round-shaped and the second mark 23 is ring-shaped.

The various embodiments mentioned above are all equally effective in permitting the planar array and the panel to be precisely aligned, thus effective and resolving the drawback inherent in the prior art device.

In the examples shown in drawings, the first mark 15 is located at the side of the liquid crystal panel and is placed into the gap or the space formed by the second mark 23 located at the side of the planar microlens array. However, this situation may be reversed, obtaining the same ease of alignment.

Moreover, in the drawings, examples are shown in which a resin of high refractive index is applied onto the surface of the glass substrate and a large number (a plurality) of convex lens are formed by a stamper. The present invention is not limited to such an arrangement, and can be equally applied to a liquid crystal display element in which recessed portions are formed on a glass substrate by etching and a resin of high refractive index is filled and cured in these recessed portions.

As is fully explained above, in accordance with the present invention, since the first and second marks, which are used when a liquid crystal display element is formed by bonding a planar micro-lens array onto a liquid crystal panel, are formed so as to precisely correspond with each other and any marks at the side of the liquid crystal panel can be seen through the flat part which does not act as lens of the planar microlens array, and therefore it becomes easy to align the position of the array and the panel.

## Claims

1. A liquid crystal display element formed by bonding a planar micro-lens array (20) onto a liquid crystal panel (10), comprising a plurality of convex lenses (22) and a first mark (15) formed on a surface of said planar micro-lens array with a resin of high refractive index, and a second mark which corresponds to said first mark on the planar micro-lens array formed on a surface of the liquid crystal panel, wherein said first and second marks have corresponding forms so as to precisely fit and align the planar micro-lens array with the liquid crystal panel when one of said marks (15) is aligned within a space formed by the other of said marks (23).

2. A display as claimed in claim 1, wherein said second mark (23) is visible through a flat portion of said high refractive index resin which lies adjacent said first mark (15).

3. A display element as claimed in claim 1 or 2, wherein said first mark (15) is aligned within the space formed by said second mark (23).

4. A display element as claimed in claim 1, 2 or 3, wherein said liquid crystal panel (10) comprises a glass substrate (12) and said first mark (15) is formed in the surface of the glass substrate which is adjacent to said planar micro-lens array (20).

5. A display element as claimed in any preceding claim, wherein one of said marks (15) is rod-shaped and the other of said marks (23) comprises two rod-like mark elements (23a) .

6. A display element as claimed in any of claims 1 to 4, wherein one of said marks (15) is cross-shaped and the other of said marks (23) comprises four either angle-shaped mark elements (23b), round-shaped mark elements (23c) or square-shaped mark elements (23d).

7. A display element as claimed in any of claims 1 to 4, wherein one of said marks (15) is round-shaped and the other of said marks (23) is ring-shaped.

8. A display element as claimed in any preceding claim, wherein more than one pair of first and second marks are provided on the surfaces of the planar micro-lens array and liquid crystal panel.

9. A liquid crystal display element comprising a planar micro-lens array (20) which is mounted on a liquid crystal panel (10), said planar micro-lens array having a first mark (15) comprising a concave hollow filled with high refractive index resin, and said liquid crystal panel having a second mark (23) which is visible through said planar micro-lens array, wherein said first and second marks have corresponding forms and are positioned in such a way relative to each other that when the planar micro-lens array is correctly aligned on said liquid crystal panel, an edge of said second mark is aligned with an edge of said first mark, said second mark being visible through a flat portion of said high refractive index resin which lies adjacent said first mark.

10. A method of making a liquid crystal display element, said method comprising the steps of:
providing a planar micro-lens array (20) comprising a plurality of convex lenses (22) and a first mark (15) formed on a surface of said planar micro-lens array with a resin of high refractive index;
providing a liquid crystal panel (10) having a second mark (23) formed in a surface of said liquid crystal panel which corresponds in position and form to said first mark;
aligning said planar micro-lens array with said liquid crystal panel by aligning said first and second marks so that one of said marks (15) is placed within the space formed by the other of said marks (23); and
bonding said planar micro-lens array in position on said liquid crystal panel.
